# EUROPÄISCHE PATENTSCHRIFT

(11) **EP 0 498 057 B1**
(45) Veröffentlichungstag und Bekanntmachung des Hinweises auf die Patenterteilung: **12.04.1995**
(21) Anmeldenummer: 91120811.4
(22) Anmeldetag: 04.12.1991
(51) Int. Cl.: B65D 90/24, E04H 5/02

(54) **Erweiterbares Lager für schädliche brennbare Flüssigkeiten**
Expandable warehouse for combustible noxious liquids
Entrepôt extensible pour liquides combustibles nocifs

(30) Priorität: 06.02.1991 DE 4103500
(43) Veröffentlichungstag der Anmeldung: 12.08.1992
(73) Patentinhaber: STELCON AKTIENGESELLSCHAFT, D-45131 Essen (DE)
(72) Erfinder: Beckmann, Klaus Dipl.-Ing, W-4630 Bochum-Stiepel (DE); Dunker, Franz-Josef Dipl.-Ing., W-4300 Essen (DE)
(74) Vertreter: Schulte, Jörg, Dipl.-Ing.

(56) Entgegenhaltungen:
- EP-A- 0 400 296
- DE-U- 8 704 772
- DE-U- 8 816 427

## Beschreibung

Die Erfindung betrifft ein Lager für die umweltfreundliche Lagerung von besonderen Auflagen unterliegenden, in Behältern bis in Faßgröße aufbewahrten VBF-Produkten mit U-förmigen, aus Beton hergestellten und Aufsatzelemente bildenden Umfassungswänden, einer korrespondierend geformten Auffangtasse mit dem als Abstellfläche für die Fässer dienenden und die Auffangwanne überdeckenden Gitterrost, wobei auch jedem Aufsatzelement ein als Zwischenboden für die übereinanderstehenden Teile wirkender Gitterrost und dem obersten Teil ein Dachelement zugeordnet ist.

Die Umwelt beeinträchtigende oder gar gefährdende VBF-Produkte der Klassen A1, A2, B+A3 nach dem Wasserhaushaltsgesetz der Bundesrepublik Deutschland müssen gesondert gelagert werden. Danach sind insbesondere Sicherheitszonen einzuhalten bzw. den Feuerwiderstandsvorschriften genügende Brandwände zu setzen, was einen erheblichen Aufwand erfordert. Darüber hinaus ist es schwierig, ggf. Unbefugte aus diesen Sicherheitsbereichen fernzuhalten. Es ist bekannt, den Müllboxen bzw. Müllcontainern ähnliche, aus geeignetem Material, vor allem Stahlblech bestehende Boxen einzusetzen, in denen die in Dosen o.ä. Behältern gelagerten Problemstoffe dann auf einem Gitterrost stehen (DE-U-86 32 864). Damit kann während der Umfüllarbeiten oder aufgrund sonstiger Probleme austretender Problemstoff in eine unter dem Gitterrost ausgebildete Auffangwanne laufen und von hieraus wieder aufgenommen und gesichert werden. Nachteilig dabei ist, daß diese Boxen nur ein begrenztes Aufnahmevolumen haben und bei sich ändernden Lagermengen nicht geeignet sind, von der Menge und von der Form her abweichende Behälter aufzunehmen. Außerdem kann je nach der Größe der Box nicht ausgeschlossen werden, daß bei Rangier- oder Transportarbeiten eine derartige Box umgestoßen wird, so daß dann wiederum eine Gefährdung der Umwelt eintritt. Aus Beton bestehende Lagervorrichtungen für umweltgefährdende Stoffe die dem Oberbegriff des Anspruchs 1 entsprechen, sind aus der DE-U-90 02 843 bekannt. Seitenwände und Rückwände bestehen aus einem einstückigen, in der Draufsicht U-förmigen Basisteil, auf das im wesentlichen deckungsgleiche Aufsatzteile aufgestellt werden können. Das Basisteil nimmt die Auffangwanne auf, während das oberste Aufsatzteil eine Dachplatte aufweist. Die einzelnen Aufsatzteile weisen jeweils einen Zwischenboden aus Querstangen auf, auf die die Behälter aufgesetzt werden können. Auch bei diesen Basis- und Aufsatzteilen ist von Nachteil, daß sie nur zu begrenzt hohen Einheiten zusammensetzbar und nur Behälter mit begrenzter Lagermenge aufnehmen können. Ansonsten besteht die Gefahr, daß die Zwischenböden die Last nicht tragen bzw. die Stabilität des Gesamtgebildes beeinträchtigt ist. Insbesondere ist nicht die Möglichkeit gegeben, auch aus solchen Basis- und Aufsatzteilen bestehende Einheiten mit anderen Einheiten zu einem großen Gesamtlager zu komplettieren. Darüber hinaus sind sie aufgrund der unzulänglichen Stabilität für Rangier- und Transportarbeiten ungeeignet. Aus der DE-Prospekt, Hoffmann Industriebau 6.9.1990 ist ein Lager bekannt, bei dem das aus der DE-GM 86 32 864 bekannte Lager durch eine Überdachung komplettiert wird. Darüber hinaus sind die Teillager durch eine Bodenwanne miteinander verbunden. Auch diese Lager weisen die weiter vorne beschriebenen Nachteile der geringen Stabilität und der schlechten Beschickbarkeit und Erweiterbarkeit auf.

Der Erfindung liegt daher die Aufgabe zugrunde, ein den Umweltschutzauflagen, insbesondere den Bestimmungen des Wasserhaushaltsgesetzes entsprechendes, standfestes und sicher zu beschickendes, ohne großen Aufwand erweiterbares bzw. den sich ändernden Bedingungen anpaßbares Lager für VBF- u.ä. Produkte zu schaffen.

Die Aufgabe wird erfindungsgemäß dadurch gelöst, daß die Auffangtasse für die weiteren Aufsatzelemente als Fundament bzw. Standelement dienend ausgebildet und mit ihnen zu einer Einheit in der Vertikalen aneinandergekoppelt ist, daß die Auffangtasse das Volumen der gestapelten Fässer und des evtl. benötigten Löschwassers berücksichtigend ausgebildet ist und über die Vorderkante der seitlichen Umfassungswände vorsteht, innenseitig medienbeständig beschichtet ist und einen Pumpensumpf aufweist, daß die Umfassungswände mit einem rundumlaufend angebrachten, den Gitterrost aufnehmenden Winkeleisen ausgerüstet und untereinander verbunden sind und daß zusätzlich die Vorderkanten der Umfassungswände jeweils über einen Kantenschutz verfügen und über ein sich daran abstützendes, quer dazu verlaufendes U-Eisen verbunden sind.

Mit Hilfe der vorliegenden Erfindung ist es somit möglich, den Umweltschutzbedingungen, insbesondere bezüglich der Menge anpaßbare Lagerung von Problemstoffen, insbesondere von VBF-Produkten zu ermöglichen. Das jeweilige Lager kann dabei vorteilhaft nach dem Baukastenprinzip aufgebaut und erweitert werden, wobei vorteilhaft nur letztlich zwei unterschiedlich ausgebildete Formteile benötigt werden, nämlich die als Fundament dienende Auffangtasse und einer entsprechenden Zahl von Aufsatzelementen, wobei letztere dann jeweils mit einem Boden bzw. einem Gitterrost zu versehen sind, auf denen die Fässer dann aufrechtstehend gelagert werden. Aufgrund der besonderen Ausbildung und insbesondere aufgrund der entsprechenden Stabilität der Auffangtassen können eine Vielzahl von Aufsatzelementen daraufgesetzt werden, so daß ein vielbödiges Lager geschaffen ist. Dieses Lager kann dann mit Hubstaplern sicher angefahren und beschickt werden, weil die einzelnen Zwischenböden, d.h. die Gitterböden stabil ausgebildet und sicher gelagert sind. Damit ist eine vor allem auch ergonmisch einwandfreie und vorteilhafte Form für ein solches Lager geschaffen. Dieses Lager genügt dabei gleichzeitig auch den behördlichen Vorschriften bezüglich des Feuerschutzes, weil zum einen Betonfertigteile zum Einsatz kommen und zum anderen, weil das die Basis einer solchen Einheit darstellende Fundament d.h. die Auffangtasse so bemessen ist, daß sowohl die in der Regel abgelagerten Problemstoffe wie auch das benötigte Löschwasser aufgefangen werden können, um dann sicher abgepumpt und entsprechend entsorgt zu werden. Dies wird weiter dadurch begünstigt, daß jede der einzelnen Einheiten eine Auffangtasse mit Pumpensumpf aufweist, medienbeständig beschichtet ist und so ausgebildet, daß das vorne abtropfende Medium bzw. das Löschwasser auch wirklich und sicher aufgefangen wird, wenn es einmal zu einer Katastrophe kommen sollte. Die einzelnen Fässer sind im hoffentlich nur vorliegenden Normalfall sicher abgelagert, weil der sie tragende Gitterrost rundum abgestützt ist, so daß auch bei Arbeiten mit dem Hubstapler Beeinträchtigungen nicht eintreten können.

Nach einer zweckmäßigen Ausbildung der Erfindung ist vorgesehen, daß der Überstand der Auffangtasse über die Umfassungswände über einen Gitterrost abgedeckt ist. Dadurch ist sichergestellt, daß das verschmutzte Wasser oder das Löschwasser auch sicher aufgefangen und in die Auffangtasse abgeleitet wird, ohne daß eine Gefährdung der Umwelt bzw. des Platzes vor den einzelnen Einheiten eintreten kann.

Um die Beschickung mit Staplern u.ä. Geräten zu erleichtern, ist vorgesehen, daß die vordere senkrechte Wand der Auffangtasse eine mindestens um die Dicke der Fahrbahnplatte verringerte Höhe aufweist. Damit liegt der Gitterrost immer etwas höher als die Fahrbahnplattenebene, wobei die Auffangtasse dennoch ein ausreichend großes Auffangvolumen aufweisen kann.

Um die die Gitterroste tragenden Winkeleisen praktisch an beliebiger Stelle festlegen zu können, sieht die Erfindung vor, daß die Umfassungswände mit Halfeneisen und die Winkeleisen mit korrespondierenden Nocken oder Schrauben ausgerüstet sind. Diese Lösung ist besonders vorteilhaft, wenn die Winkeleisen abschnittsweise und nicht durchlaufend vorgesehen werden sollen bzw. vorgesehen werden müssen.

Zur Verbindung der einzelnen Aufsatzelemente ist vorgesehen, daß die Umfassungswände, die Auffangtassen und die Fahrbahnplatten korrespondierende Anker oder Ankerschrauben aufnehmende Sackbohrungen oder Bohrungen aufweisen. Dabei sind diese Sackbohrungen in den Umfassungswänden immer an der gleichen Stelle angebracht, so daß beim Aufstellen der einzelnen Einheiten und der Verbindung der Aufsatzelemente nur ein geringer Montageaufwand anfällt. Gleiches gilt für die Verbindung mit den Auffangtassen bzw. der Fahrbahnplatten mit den Auffangtassen, wenn ein entsprechend mit gegenüberliegenden Einheiten ausgerüstetes Gesamtlager geschaffen werden soll.

Die notwendige Dichtheit einer solchen Einheit gegenüber der Umwelt wird erfindungsgemäß dadurch erreicht, daß die Fugen zwischen den aufeinanderstehenden Umfassungswänden abgedichtet, vorzugsweise mit Zementmörtel geschlossen sind. Dies gilt auch für nebeneinanderstehende Einheiten, so daß insgesamt eine vorteilhafte Dichtheit eines solchen Lagers gesichert ist, wobei dies insbesondere im unteren Bereich jeweils eine Einheit wichtig ist. Denkbar ist es auch, hier flexible Dichtmittel einzusetzen, wenn sich dies aufgrund der Gegebenheiten als notwendig erweisen sollte.

Soll ein insgesamt gegen die Witterungseinflüsse gesichertes Lager geschaffen werden, so ist dies ohne großen Aufwand gemäß der Erfindung dadurch möglich, daß die jeweils obersten U-förmigen Aufsatzelemente über zur offenen Seite hin geneigt angebrachte Trapezbleche abgedeckt sind, wobei zweckmäßig die gegenüberliegend angeordneten, obersten Aufsatzelemente über eine gewölbte Gangüberdachung verbunden sind und eine rechtwinklig dazu verlaufende Rinne aufweisen. Damit kann das gesamte Regenwasser aufgefangen und über die Rinne abgeführt werden, ohne daß die darunterliegenden Bereiche dadurch beeinträchtigt werden. So kann evtl. abgetropftes Öl nicht vom Regenwasser mitgenommen werden, so daß eine Reinigung des Regenwassers notwendig ist. Vielmehr ergibt sich ein geschlossenes Ganzes, das aufgrund dieser Überdachung nun auch nicht gesondert gegenüber Flutung o.ä. gesichert werden muß. Vielmehr braucht eine diesem Lager zugeordnete Pumpe nur aus absoluten Sicherheitsgründen vorgesehen und eingesetzt werden, nämlich, wenn wirklich einmal ein oder mehrere Fässer ausgelaufen sein sollten. Das Regenwasser wird, wie erläutert, getrennt abgeführt.

Um nicht bei jeder einzelnen Auffangtasse eine Pumpe ansetzen zu müssen und um damit letztlich auch ein größeres Gesamtvolumen für das Auffangen auslaufender Flüssigkeiten vorzugeben, ist es vorteilhaft, wenn die Auffangtassen unter den Aufsatzelementen und den Fahrbahnplatten jeweils mit korrespondierenden Überlaufrinnen ausgerüstet sind. Damit ist erreicht, daß beim Auslaufen von Problemstoffen im Bereich einer Einheit eine Überlastung der Auffangtassen nicht eintreten kann, sondern daß sich vielmehr der Problemstoff selbst in den danebenliegenden Auffangtassen verteilt. Gleichzeitig kann dann auch das gesamte Lager so ausgebildet werden, daß zunächst einmal die Problemstoffe zum tiefstliegenden Pumpensumpf überlaufen, von wo sie dann gezielt abgesaugt werden. Die übrigen Pumpensümpfe sollten aber beibehalten werden.

Die Anforderungen an die Dichtheit des Betons gegenüber den gelagerten Medien und gegenüber kontaminiertem Löschwasser wird Genüge getan, wenn gemäß der Erfindung die Auffangtassen, Aufsatzelemente und Fahrbahnplatten als Stahlbetonfertigteile ausgebildet und aus einem B 35 WU bis B 55 WU Beton gefertigt sind. Ein solcher, wasserundurchlässiger Beton genügt den Auflagen des Wasserhaushaltungsgesetzes, so daß dann bei den geschilderten Gegebenheiten ausgelaufene Medien aufgefangen und geschlossen wieder entfernt und sicher gelagert werden können.

Einander gegenüberliegend angeordnete Einheiten können vorteilhaft zu einer Gesamteinheit durch Fahrbahnplatten mit einer Auffangtasse zusammengefaßt werden. Damit kann auch der Bereich zwischen solchen Einheiten vorteilhaft über Baukastenteile abgedeckt bzw. ausgebaut werden. Um bei einem evtl. Brand oder sonstigen Gefährdungen auch größere Löschwassermengen sicher aufnehmen zu können, ohne die Umwelt zu gefährden und um dem Ganzen eine vorteilhafte Stabilität zu geben, sieht die Erfindung vor, daß ein oder mehrere gegenüberliegend angeordnete Einheiten mit verbindenden Fahrbahnplatten über eine gemeinsame, geneigt eingebrachte Auffahrrampe und eine am gegenüberliegenden Ende der Fahrbahnplattenebene senkrechtstehende Kopfplatte verfügen. Damit ist ein derartiges Lager mit Hubstaplern u.ä. Geräten gut befahrbar, bildet aber insgesamt eine große "Auffangwanne", die dem Ganzen die notwendige Geschlossenheit oder besser gesagt Abgeschlossenheit gibt. Dennoch kann ein solches Lager, das beispielsweise in der Vertikalen die Erweiterungsmöglichkeiten ausgeschöpft hat, in der Horizontalen erweitert werden, indem die Auffahrrampe entfernt und nach der Erweiterung entsprechend wieder eingesetzt wird. Natürlich kann auch die senkrechtstehende Kopfplatte entsprechend weiter versetzt werden, wenn dies den Gegebenheiten entsprechend besser zu verwirklichen ist.

Die Erfindung zeichnet sich insbesondere dadurch aus, daß ein ohne Probleme erweiterbares Lager für VBF-Produkte geschaffen ist, das einfach zu beschicken und zu warten ist und das aus wenigen "Baukastenteilen" zusammensetzbar ist, wodurch auch der Herstellungsaufwand in Grenzen gehalten werden kann. Vorteilhaft ist dabei die Sicherung der Umwelt und die ergonomische Ausbildung eines derartigen,praktisch beliebig erweiterbaren Lagers.

Weitere Einzelheiten und Vorteile des Erfindungsgegenstandes ergeben sich aus der nachfolgenden Beschreibung der zugehörigen Zeichnungen, in der ein bevorzugtes Ausführungsbeispiel mit den dazu notwendigen Einzelheiten und Einzelteilen dargestellt ist. Es zeigen:
- Fig. 1: eine Draufsicht auf ein aus mehreren Einheiten bestehendes Lager,
- Fig. 2: einen Querschnitt durch das aus Fig. 1 entnehmbarer Lager,
- Fig. 3: den Verbindungsbereich zwischen Aufsatzelement und Auffangtasse im Querschnitt,
- Fig. 4: eine Auffangtasse im Querschnitt,
- Fig. 5: die Abstützung des Gitterrostes an der Rückseite eines Aufsatzelementes,
- Fig. 6: die Abstützung des Gitterrostes auf der Vorderseite eines Aufsatzelementes,
- Fig. 7: Längsschnitt im Bereich der Auffangtasse und des ersten Aufsatzelementes,
- Fig. 8: die den Fahrbahnplatten zugeordnete Auffangtasse in Draufsicht,
- Fig. 9: ein Aufsatzelement in Vorkopfansicht,
- Fig. 10: ein Aufsatzelement in Draufsicht,
- Fig. 11: ein Aufsatzelement im Querschnitt und
- Fig. 12: ein Querschnitt durch ein Lager mit Überlaufrinnen aufweisenden Auffangtassen.

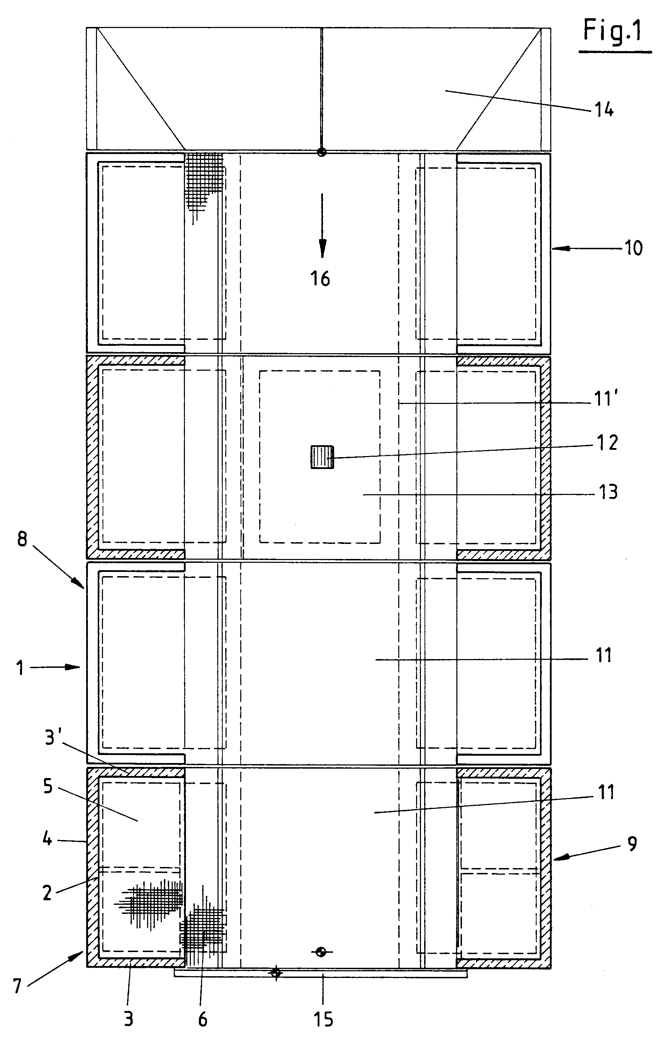

Fig. 1 zeigt ein Lager (1) in Draufsicht, das aus einer Vielzahl von gleichausgebildeten Baukastenteilen zusammengesetzt ist. Sichtbar sind die aus einer hinteren Umfassungswand (2) und seitlichen Umfassungswänden (3) bestehenden U-förmigen Aufsatzelemente (4).

Unter die jeweils mehreren aufeinanderstehenden Aufsatzelementen (4) befindet sich eine Auffangtasse (5), die aus Fig. 1 in den Einzelheiten nicht ersichtlich ist. Deutlich wird allerdings, daß diese Auffangtassen (5) im Querschnitt größer bemessen sind, d.h. nach vorne über die Aufsatzelemente (4) vorstehend ausgebildet sind. Dieser Überstand wird durch einen entsprechend bemessenen kleinen Gitterrost (6) abgedeckt.

Die aus einer Auffangtasse (5) und mehreren aufeinander aufgesetzten Aufsatzelementen (4) bestehenden Einheiten (7, 8, 9, 10) bilden insgesamt das in Fig. 1 in Draufsicht wiedergegebene Lager (1) zum Ablagern von vor allem in Fässern aufbewahrten VBF-Produkten. Die einander gegenüber angeordneten Einheiten (7, 8 und 9) werden durch Fahrbahnplatten (11) miteinander verbunden, so daß sie beispielsweise über einen Gabelstapler gut und sicher zu beschicken sind.

Die mittlere Fahrbahnplatte (11') ist mit einem Einlauf (12) versehen, über den ablaufendes Schmutzwasser oder gar Problemstoffe in die darunterliegende Auffangtasse (13) gelangen können. Theoretisch denkbar ist, daß jeder der einzelnen Fahrbahnplatten (11, 11') eine solche Auffangtasse (13) zugeordnet ist, doch reicht es für ein beispielsweise aus Fig. 1 ersichtliches Lager (1), wenn nur eine solche mittlere Auffangtasse (13) vorgesehen ist.

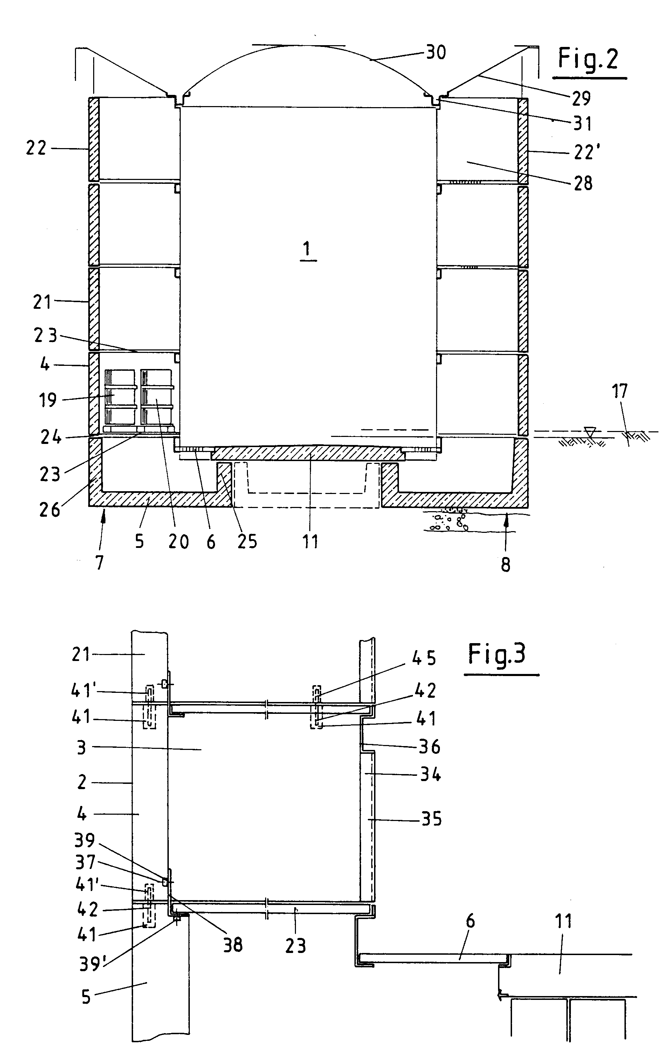

Das gesamte Lager (1) ist wie Fig. 2 entnommen werden kann etwas in den Erdboden eingesetzt, so daß bei auftretenden Gefahren zur Not eine Überflutung möglich ist. Befahren werden kann diese unter der Umgebungsoberfläche liegende Fahrbahnplattenebene (16) durch eine entsprechend geneigt angebrachte Auffahrrampe (14). Am der Auffahrrampe (14) gegenüberliegenden Ende der Fahrbahnplattenebene (16) ist eine Kopfplatte (15) angebracht, die für eine Abstützung des anliegenden Erdreiches sorgt und gleichzeitig den Innenraum entsprechend abdichtet.

Das aus Fig. 1 im Grundriß ersichtliche Lager (1) ist in Fig. 2 im Querschnitt wiedergegeben. Dabei werden auch die säulenförmigen Einheiten (7, 8) anschaulich wiedergegeben, die jeweils aus einer Auffangtasse (5) und mehreren aufeinandergestockten Aufsatzelementen (4, 21, 22) zusammengesetzt sind. Diese Aufsatzelemente (4, 21, 22) weisen alle die gleichen Abmessungen auf und sind wie Fig. 1 zu entnehmen ist, U-förmig ausgebildet. Der die eingelagerten Fässer (19, 20) aufnehmende Gitterrost (23) ist dabei durch entsprechende Zusatzelemente an den Aufsatzelementen (4, 21, 22) abgestützt. Die Fugen (24) sind abgedichtet, so daß von außen Feuchtigkeit nicht eindringen kann und andererseits auch von innen her keine Problemstoffe in den Erdboden (17) eindringen können. Weiter vorne ist bereits erläutert worden, daß die Auffangtassen (5) jeweils über die Aufsatzelemente (4) nach Innen vorkragen und daß dieser Bereich durch den Gitterrost (6) abgedeckt ist. An diesen Gitterrost (6) schließt sich dann die beide Einheiten (7, 8) verbindende Fahrbahnplatte (11) an, die in etwa die gleiche Oberfläche aufweist, so daß sich eine plane Fahrbahnplattenebene (16) ergibt. Hier kann zwar wie Fig. 2 verdeutlicht eines geringes Gefälle zu den Gitterrosten (6) hin vorgegeben werden, doch ist dieses Gefälle so gering, daß es den Fahrverkehr mit den Hubstaplern nicht beeinträchtigt.

Die senkrechte vordere Wand (25) der Auffangtasse (5) ist niedriger bemessen als die hintere Wand (26). Dadurch ist die Möglichkeit gegeben, die Fahrbahnplatte (11) aufzulagern und dennoch einen gewissen Abstand zum jeweiligen Gitterrost (23) vorzugeben, so daß das Beladen mit Hubstaplern erleichtert ist.

Auch nach oben hin kann ein derartiges Lager (1) abgeschlossen werden, in dem zur offenen Seite (28) hin geneigte Trapezbleche (29) das oberste Aufsatzelement (22) bzw. (22') abdecken. Die Vorderkante wird von einer Rinne (31) gebildet, die somit das Regenwasser aufnimmt, das einmal über die Trapezbleche (29) und andererseits durch die Gangüberdachung (30) hierin abgeführt werden kann.

Eine solche aus Fig. 2 entnehmbare Überdachung ist nicht unbedingt notwendig, doch bringt sie den Vorteil, daß dann das Regenwasser nicht in die Auffangtassen (5, 13) gelangen und sich mit dort evtl. befindlichen Problemstoffen mischen kann.

Fig. 3 zeigt die Abstützung der Gitterroste (23). Hierzu weisen die Vorderkanten (34) der seitlichen Umfassungswände (3) einen Kantenschutz (35) auf, an dem ein parallel zur hinteren Umfassungswand (2) verlaufend angeordnetes U-Eisen (36) festgelegt bzw. festgeschraubt werden kann. Auf diesem U-Eisen (36) lagert der Gitterrost (23), der an der Rückseite und auch an den seitlichen Umfassungswänden (3) über ein Winkeleisen (38) abgestützt wird, das über in Halfeneisen (37) eingreifende Nocken (39) an den Umfassungswänden (2, 3) festgelegt wird. Dieses Halfeneisen (37) , das in den Beton der Aufsatzelemente (4, 21, 22) eingelassen ist, bietet den Vorteil, daß diese Winkeleisen (38) praktisch an beliebiger Stelle festgelegt werden können.

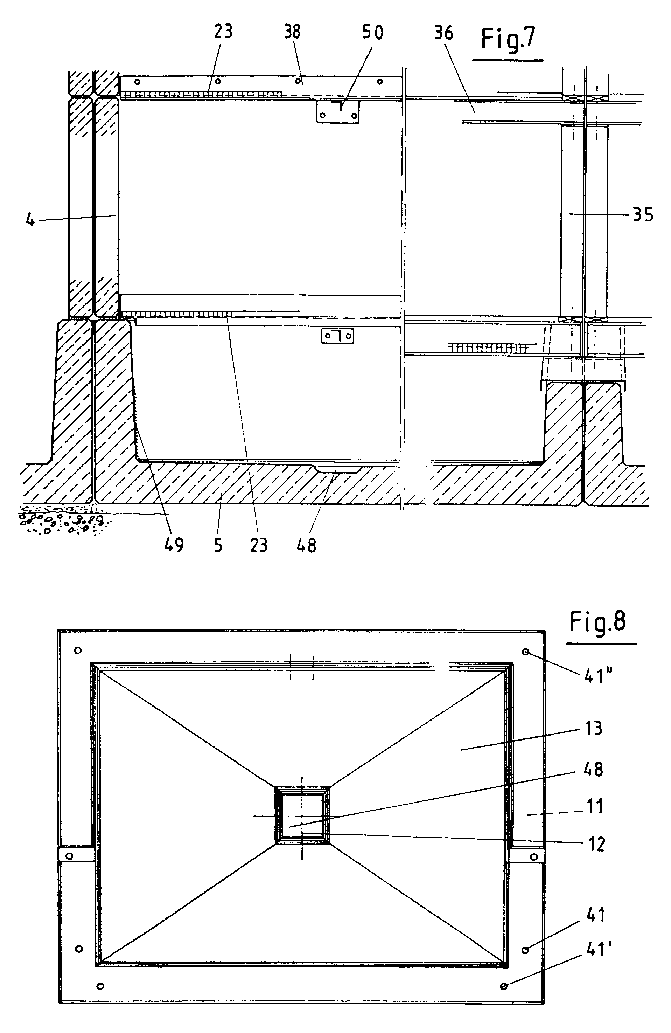

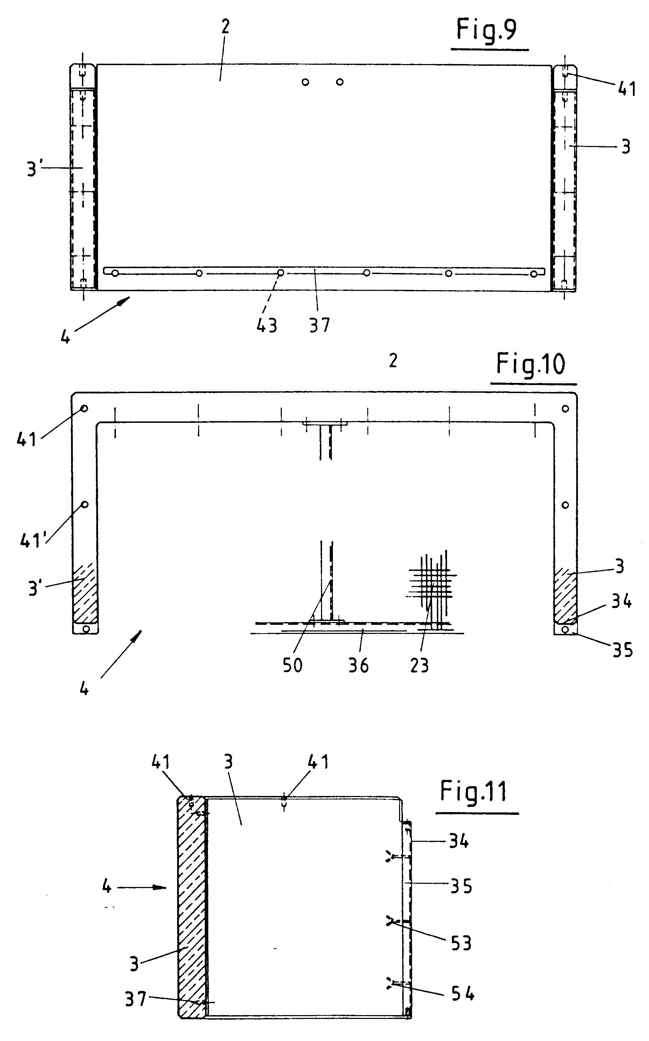

Zur Verbindung der einzelnen Aufsatzelemente (4, 21, 22) und Auffangtassen (5 bzw. 13) sind in den einzelnen Elementen Sackbohrungen (41) und Ankerschrauben (42, 45) vorgesehen. Da die Sackbohrungen (41) wie insbesondere auch den Figuren 8 und 10 zu entnehmen ist, immer an der gleichen Stelle vorgesehen sind, ist ein einfaches Verbinden der einzelnen Elemente miteinander möglich.

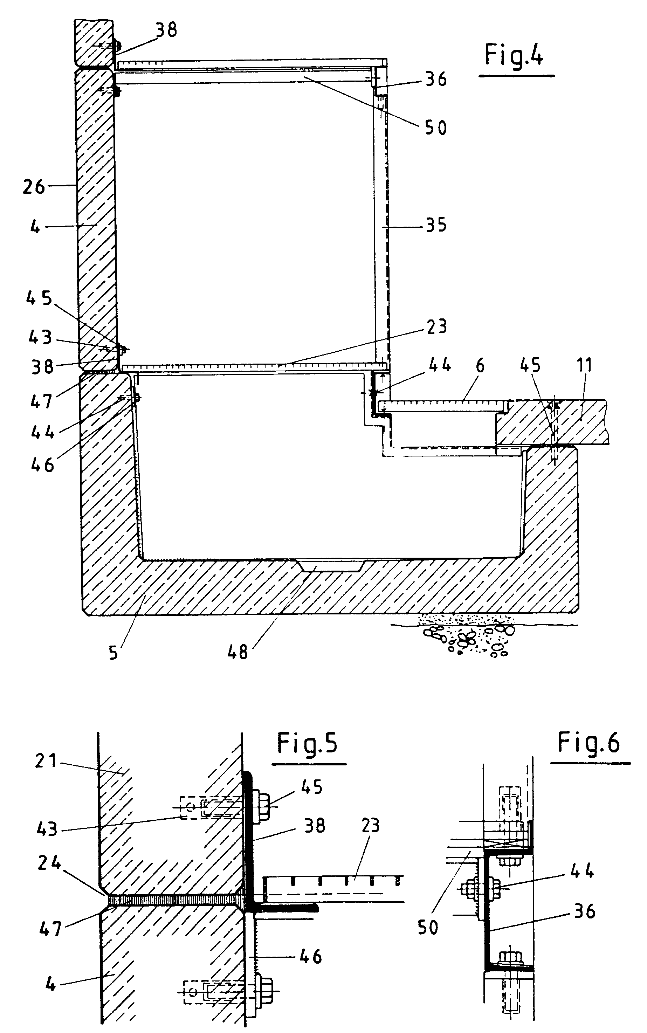

Fig. 4 zeigt eine etwas andere Ausführung der Winkeleisen (38), wobei hier eine Festlegung über die Halteschrauben (44) erfolgt, die in entsprechende Bohrungen (43) eingeschraubt sind. Damit ist aber der Punkt jeweils zwangsweise vorgegeben, an dem die Halteschraube (44) und damit auch das Winkeleisen (38) angebracht werden muß, während die weiter vorn erläuterte Ausführungsform die Möglichkeit gibt, diese Winkeleisen (38) praktisch an beliebiger Stelle vorzusehen.

Unterhalb den jeweiligen Winkeleisen (38) ist ein Stützeisen (46) vorgesehen, das ebenfalls über Halteschrauben (44) an der Rückwand (26) der einzelnen Aufsatzelemente (4, 21, 22) bzw. der Auffangtassen (5) befestigt ist.

Die Fugen (24) zwischen den einzelnen Aufsatzelementen (4, 21, 22) und der Auffangtasse (5) sind über Zementmörtel (47) ausgefüllt, so daß die weiter vorn beschriebene Abdichtung möglich ist. Fig. 5 zeigt dies in vergrößerter Wiedergabe, wobei hier auch noch einmal die Festlegung der Winkeleisen (38) wiedergegeben ist. Deutlich wird dabei insbesondere das Stützeisen (46), das von unten her gegen das Winkeleisen (38) angelegt ist, um die entsprechenden Belastungen des Gitterrostes (23) und der aufstehenden Fässer (19, 20) sicher aufzunehmen.

Fig. 6 verdeutlicht die Festlegung des U-Eisens (36) über die Halteschrauben (44) und zwar sowohl an einem Zwischenträger (50) wie auch im Gitterrost (23).

Fig. 7 zeigt einen Längsschnitt, wobei auch die Anordnung der Zwischenträger (50) noch einmal erläutert ist, auf die sich die Gitterroste (23) abstützen können bzw. die den Gitterrost (23) abstützende Winkeleisen (38).

Unten in der Auffangtasse (5) ist Pumpensumpf (48) wiedergegeben, in dem sich zunächst einmal das in die Auffangtasse (5) einlaufende Medium hineinbewegt, um von hier aus leichter abgesaugt bzw. abgepumpt werden zu können. Deutlich wird hier auch, daß die Innenseite der Auffangtasse (5) und auch der Auffangtasse (13) mit einer Beschichtung versehen ist, um eine mediengerechte Abdichtung zu erreichen.

Fig. 8 zeigt eine Draufsicht auf die Auffangtasse (13), die sich unterhalb der hier nicht wiedergegebenen Fahrbahnplatte (11) befindet. Deutlich sichtbar wird einmal der Einlauf (12) bzw. der darunterliegende Pumpensumpf (48), in dem sich das gesamte VBF-Produkt sammelt, bevor es dann wie schon mehrfach erläutert abgesaugt wird. Am Rand der Auffangtasse (13) sind Sackbohrungen (41) vorgesehen, über die die Verbindung mit dem darüberliegenden, hier nicht wiedergegebenen Aufsatzelement (4) erfolgt. Dort, wo diese Aufsatzelemente (4, 21, 22) aufgesetzt werden, sind mehrere derartige Sackbohrungen (41, 41') vorgesehen, während die Sackbohrung (41'') an der Vorderseite der Auffangtasse (5) vorgesehen ist, um hier den Gitterrost (6) bzw. andere Teile festzulegen.

Die Figuren 9, 10 und 11 zeigen ein Aufsatzelement (4) einmal in Seitenansicht, dann in Draufsicht und schließlich im Querschnitt. Deutlich wird hier die Anordnung des Kantenschutzes (35) vor der Vorderkante (34) der Aufsatzelemente (3, 3') sowie die Anordnung und der Verlauf des Halfeneisens (37). Deutlich werden außerdem die Sackbohrungen (41, 41') bei der Draufsicht nach Fig. 10 und bei dem Schnitt nach Fig. 11, wobei Fig. 11 zusätzlich noch die Anordnung von Flachstahlankern (53, 54) wiedergibt, mit denen der Kantenschutz (35) an der Vorderkante (34) festgelegt werden kann.

Fig. 10 zeigt außerdem einen Zwischenträger (50), der zur zusätzlichen Absicherung und zum Abstützen des Gitterrostes (23) dient.

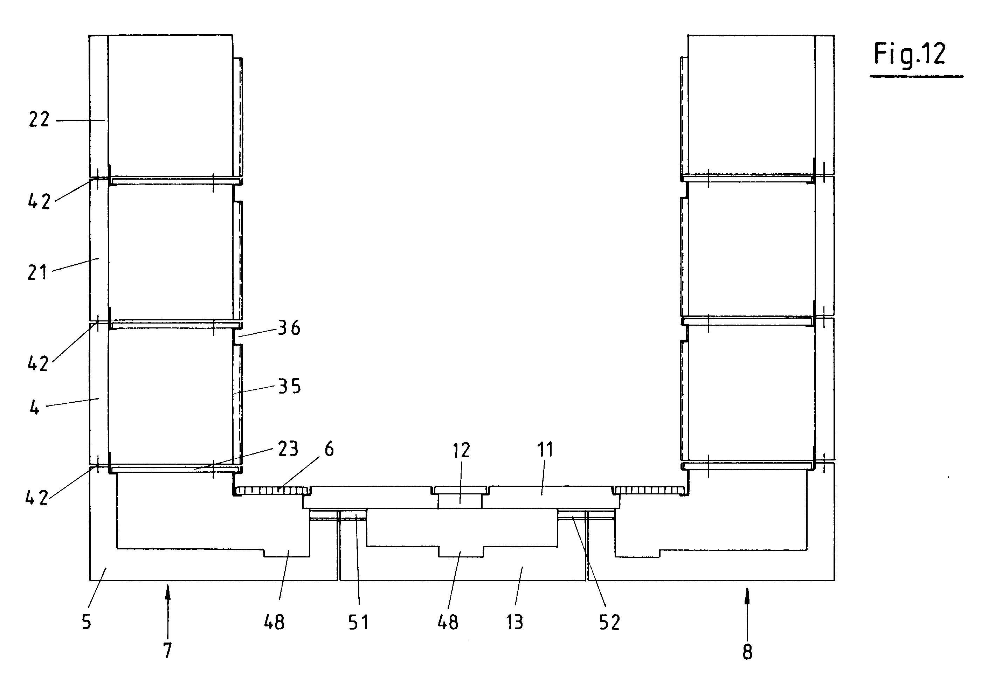

Die Darstellung nach Fig. 12 entspricht im wesentlichen der nach Fig. 2, nur daß hier Auffangtassen (5, 13) wiedergegeben sind, die randseitig einen Pumpensumpf (48) wiedergeben und darüber hinaus die einzelnen Auffangtassen (5, 13) miteinander verbindende Überlaufrinnen (51, 52).

Auch bei Fig. 12 sind die einzelnen Auffangtassen (5) mit den Aufsatzelementen (4, 21, 22) über Ankerschrauben (42) miteinander so verbunden, daß sich insgesamt sehr stabile Einheiten (7, 8) ergeben.

Eine Einheit (7, 8, 9, 10) kann bei entsprechender Auslegung in drei Lagerebenen wie aus Fig. 12 zu ersehen ist, jeweils 24 Fässer mit beispielsweise 200 L Inhalt aufnehmen. Die beiden einander gegenüberliegenden Einheiten (7, 8) können somit insgesamt 48 Fässer mit je 200 L Inhalt aufnehmen.

Die Lagerkapazität kann beispielsweise bei diesen beiden Einheiten (7, 8) durch eine weitere Lagerebene mit jeweils einem Aufsatzelement erweitert werden, wodurch dann eine solche Doppeleinheit insgesamt 64 Fässer mit je 200 L Inhalt aufnehmen kann.

## Patentansprüche

1. Lager für die umweltfreundliche Lagerung von besonderen Auflagen unterliegenden, in Behältern bis in Faßhöhe aufbewahrten VBF-Produkten mit U-förmigen, aus Beton hergestellten und Aufsatzelemente (4,21,22) bildenden Umfassungswänden (2,3), einer korrespondierend geformten Auffangtasse (5) mit dem als Abstellfläche für die Fässer dienenden und die Auffangwanne überdeckenden Gitterrost (6), wobei auch jedem Aufsatzelement ein als Zwischenboden für die übereinanderstehenden Teile wirkender Gitterrost (23) und dem obersten Teil ein Dachelement (29,30) zugeordnet ist, **dadurch gekennzeichnet**, daß die Auffangtasse (5) für die weiteren Aufsatzelemente (21, 22) als Fundament bzw. Standelement dienend ausgebildet und mit ihnen zu einer Einheit (7, 8, 9, 10) in der Vertikalen aneinandergekoppelt ist, daß die Auffangtasse das Volumen der gestapelten Fässer (19, 20) und des evtl. benötigten Löschwassers berücksichtigend ausgebildet ist und über die Vorderkante (34) der seitlichen Umfassungswände (3) vorsteht, innenseitig medienbeständig beschichtet ist und einen Pumpensumpf (48) aufweist, daß die Umfassungswände (2, 3) mit rundumlaufend angebrachten, den Gitterrost (23) aufnehmenden Winkeleisen (38) ausgerüstet und untereinander verbunden sind und daß zusätzlich die Vorderkanten (34) der Umfassungswände (3) jeweils über einen Kantenschutz (35) verfügen und über ein sich daran abstützendes, quer dazu verlaufendes U-Eisen (36) verbunden sind.

2. Lager nach Anspruch 1, **dadurch gekennzeichnet**, daß der Überstand der Auffangtasse (5) über die Umfassungswände (3) über einen Gitterrost (6) abgedeckt ist.

3. Lager nach Anspruch 1, **dadurch gekennzeichnet**, daß die vordere senkrechte Wand (25) der Auffangtasse (5) eine mindestens um die Dicke der Fahrbahnplatte (11) verringerte Höhe aufweist.

4. Lager nach Anspruch 1, **dadurch gekennzeichnet**, daß die Umfassungswände (2, 3) mit Halfeneisen (37) und die Winkeleisen (38) mit korrespondierenden Nocken (39) ausgerüstet sind.

5. Lager nach Anspruch 1, **dadurch gekennzeichnet**, daß die Umfassungswände (2, 3), die Auffangtassen (5, 13) und die Fahrbahnplatten (11) korrespondierende Anker oder Ankerschrauben (42) aufnehmende Sackbohrungen (41) oder Bohrungen (43) aufweisen.

6. Lager nach Anspruch 1, **dadurch gekennzeichnet**, daß die Fugen (24) zwischen den aufeinanderstehenden Umfassungswänden (2, 3) abgedichtet, vorzugsweise mit Zementmörtel (47) geschlossen sind.

7. Lager nach Anspruch 1, **dadurch gekennzeichnet**, daß die jeweils obersten U-förmigen Aufsatzelemente (22) über zur offenen Seite (28) hin geneigt angebrachte Trapezbleche (29) abgedeckt sind und eine rechtwinklig dazu verlaufende Rinne (31) aufweisen.

8. Lager nach Anspruch 1, **dadurch gekennzeichnet**, daß die Auffangtassen (5, 13) unter den Aufsatzelementen (4, 21, 22) jeweils mit korrespondierenden Überlaufrinnen (51, 52) ausgerüstet sind.

9. Lager nach Anspruch 1, **dadurch gekennzeichnet**, daß die Auffangtassen (5, 13), Aufsatzelemente (4, 21, 22) und Fahrbahnplatten (11) als Stahlbetonfertigteile ausgebildet und mit einem B 35 WU bis B 55 WU Beton gefertigt sind.

10. Lager nach Anspruch 1, **dadurch gekennzeichnet**, daß ein oder mehrere gegenüberliegend angeordnete Einheiten (7, 8; 9, 10) mit verbindenden Fahrbahnplatten (11) über eine gemeinsame, geneigt eingebrachte Auffahrrampe (14) und eine am gegenüberliegenden Ende der Fahrbahnplattenebene (16) senkrechtstehende Kopfplatte (15) verfügen.

## Claims

1. Storage facility for environmentally friendly storage of volatile noxious liquid (VBF) products subject to special provisions kept in containers up to barrel height, with U-shaped external walls (2, 3) made of concrete and forming stacking elements (4, 21, 22), a correspondingly shaped collecting reservoir (5) with a grating (6) covering the collecting reservoir and serving as a support surface for the barrels, wherein each stacking element is also provided with a grating (23) acting as an intermediate floor for the parts standing one above the other and with a roof element (29, 30), characterised in that the collecting reservoir (5) acts as a foundation or base element for the other stacking elements (21, 22) and is joined vertically to these to form a unit (7, 8, 9, 10); that the collecting reservoir is constructed to take into account the volume of the stacked barrels (19, 20) and any quenching water required, and protrudes over the front edge (34) of the external side walls (3), is coated on the inside to be resistant to the medium and has a pump sump (48); that the external walls (2, 3) are fitted with angle rods (38) extending around the periphery to receive the grating (23) and are connected to one another; and that in addition the front edges (34) of the external walls (3) each have an edge protector (35) and are connected via a U-shaped rod (36) supported thereon and extending obliquely thereto.

2. Storage facility according to Claim 1, characterised in that the end of the collecting reservoir (5) protruding over the external walls (3) is covered by a grating (6).

3. Storage facility according to Claim 1, characterised in that the height of the front vertical wall (25) of the collecting reservoir (5) is reduced by at least the thickness of the floor plate (11).

4. Storage facility according to Claim 1, characterised in that the external walls (2, 3) are fitted with holding rods (37) and the angle rods (38) are provided with corresponding cams (39).

5. Storage facility according to Claim 1, characterised in that the external walls (2, 3), the collecting reservoir (5, 13) and the floor plates (11) have blind holes (41) or holes (43) to receive corresponding anchors or anchor bolts (42).

6. Storage facility according to Claim 1, characterised in that the joints (24) between the external walls (2, 3) standing one above the other are sealed, preferably with cement mortar (47).

7. Storage facility according to Claim 1, characterised in that each of the top U-shaped stacking elements (22) is covered by means of trapezoidal plates (29) sloping towards the open side (28) and has a groove (31) running perpendicular thereto.

8. Storage facility according to Claim 1, characterised in that the collecting reservoirs (5, 13) under the stacking elements (4, 21, 22) are fitted with corresponding overflow channels (51, 52).

9. Storage facility according to Claim 1, characterised in that the collecting reservoirs (5, 13), stacking elements (4, 21, 22) and floor plates (11) are provided as reinforced concrete finished parts and are made from a B 35 WU to B 55 WU concrete.

10. Storage facility according to Claim 1, characterised in that one or several units (7, 8; 9, 10) arranged opposite one another with connecting floor plates (11) are provided with a joint sloping run-up ramp (14) and a head plate (15) standing upright on the opposite end of the floor plate plane (16).

## Revendications

1. Entrepôt pour entreposer de façon à respecter l'environnement des produits inflammables soumis à des obligations particulières, conservés dans des récipients pouvant aller jusqu'à la hauteur d'un tonneau, comprenant des parois périphériques (2, 3) en béton qui forment des éléments empilés (4, 21, 22), une cuvette formant réceptacle (5) de forme correspondante munie du caillebotis (6) servant de surface de dépôt pour les tonneaux et recouvrant la cuve réceptrice, un caillebotis (23) formant plancher intermédiaire pour les parties superposées étant également associé à chaque élément empilé et un élément formant toit (29, 30) étant associé à la partie supérieure, caractérisé en ce que la cuvette formant réceptacle (5), pour les autres éléments empilés (21, 22), sert de fondation ou d'élément de base, avec un accouplement mutuel avec eux, en une unité (7, 8, 9, 10), pour former des montants, en ce que la cuvette formant réceptacle est réalisée en tenant compte du volume des tonneaux empilés (19, 20) et de l'eau d'extinction éventuellement nécessaire et fait saillie au-delà du bord avant (34) des parois périphériques latérales (3), est revêtue intérieurement de manière à résister aux agents et comporte une bâche de pompe (48), en ce que les parois périphériques (2, 3) sont équipées de cornières (38) disposées sur leur pourtour et recevant le caillebotis (23), et sont reliés entre elles, et en ce que, en outre, les bords avant (34) des parois périphériques (3) sont munis respectivement d'une protection de bord (35) et sont reliés par un fer en U (36) qui s'appuie sur celle-ci et s'étend perpendiculairement à elle.

2. Entrepôt suivant la revendication 1, caractérisé en ce que la partie de la cuvette formant réceptacle (5) qui dépasse des parois périphériques (3) est recouverte par un caillebotis (6).

3. Entrepôt suivant la revendication 1, caractérisé en ce que le bord avant vertical (25) de la cuvette formant réceptacle (5) présente une hauteur réduite d'au moins l'épaisseur de la plaque (11) formant voie de circulation.

4. Entrepôt suivant la revendication 1, caractérisé en ce que les parois périphériques (2, 3) sont équipées de ferrures auxiliaires (37), les cornières (38) étant équipées de taquets correspondants (39).

5. Entrepôt suivant la revendication 1, caractérisé en ce que les parois périphériques (2, 3), les cuvettes formant réceptacle (5, 13) et les plaques (11) formant voie de circulation comportent des évidements borgnes (41) ou des perçages (43) recevant des dispositifs ou des vis d'ancrage (42).

6. Entrepôt suivant la revendication 1, caractérisé en ce que les joints (24) entre les parois périphériques (2, 3) superposées sont étanchés, de préférence fermés au moyen d'un mortier de ciment (47).

7. Entrepôt suivant la revendication 1, caractérisé en ce que chaque élément empilé supérieur (22) en forme de U est recouvert par une tôle en trapèze (29) inclinée vers le côté ouvert (28) et comporte une rigole (31) qui s'étend perpendiculairement à celle-ci.

8. Entrepôt suivant la revendication 1, caractérisé en ce que chaque cuvette formant réceptacle (5, 13) est équipée, sous les éléments empilés (4, 21, 22), de rigoles de trop-plein correspondantes (51, 52).

9. Entrepôt suivant la revendication 1, caractérisée en ce que les cuvettes formant réceptacle (5, 13), les éléments empilés (4, 21, 22) et les plaques (11) formant voie de circulation sont réalisés sous la forme de pièces en béton armé, avec un béton B35WU à B55WU.

10. Entrepôt suivant la revendication 1, caractérisé en ce qu'une ou plusieurs unités juxtaposées (7, 8), (9, 10), avec les plaques de liaison (11) formant voie de circulation, sont équipées d'une rampe d'accès inclinée commune et d'une plaque de tête verticale (15) disposée à l'extrémité opposée du plan (16) des plaques formant voie de circulation.
